# FASCICULE DE BREVET EUROPEEN

(11) **EP 1 357 638 B1**
(45) Date de publication et mention de la délivrance du brevet: **07.11.2007**
(21) Numéro de dépôt: 02360130.5
(22) Date de dépôt: 25.04.2002
(51) Int. Cl.: H01R 4/36

(54) **Borne de repiquage pour appareil électrique modulaire**
Abzweigungsanschluss für elektrische Moduleinrichtung
Derivation terminal for electrical modular apparatus

(43) Date de publication de la demande: 29.10.2003
(73) Titulaire: HAGER ELECTRO S.A., 67215 Obernai (FR)
(72) Inventeur: Boros, Ligia, 67700 Saverne (FR); Albe, Pierre, 67530 Boersch (FR); Helfter, Marc, 67114 Eschau (FR)
(74) Mandataire: Littolff, Denis

(56) Documents cités:
- US-A- 5 006 074

## Description

La présente invention concerne un dispositif de repiquage de la tension électrique, destiné à être employé notamment dans des tableaux de distribution électrique équipés d'appareils modulaires de type disjoncteurs, interrupteurs différentiels, etc...

Ces tableaux ou armoires de distribution comportent des rails parallèles normalisés sur lesquels sont fixés lesdits appareils modulaires, qui y sont juxtaposés.

Selon un schéma de branchement classique, un certain nombre de disjoncteurs dévolus à des circuits particuliers, notamment dans des applications domestiques, sont connectés à un appareil de tête, par exemple un interrupteur différentiel ou un disjoncteur différentiel. Leur alimentation à partir du module différentiel s'effectue en général à l'aide de peignes ou barres de pontage, qui simplifient la connexion d'une entrée de ces appareils à une sortie dudit module. La liaison est rigide et ne permet par conséquent des raccordements que sur les appareils disposés sur la même rangée, c'est-à-dire fixés au même rail.

Il n'est cependant pas rare que le nombre de disjoncteurs divisionnaires qui doivent être reliés à un appareil de tête excède les capacités de la rangée. Dans ce cas, il faut repiquer le signal en un point de la barre de pontage, et réaliser la connexion avec un appareil modulaire disposé sur une rangée connexe, celui-ci étant à son tour éventuellement raccordé à d'autres modules par barre de pontage.

Ce repiquage se fait soit par connexion directe, par exemple à l'aide d'un fil souple raccordé à la borne d'un appareil de la rangée initiale et à celle d'un appareil de la seconde rangée. Il peut cependant également être effectué à l'aide d'une borne de raccordement, appelée "bec de canard", constituée d'une borne à cage et vis munie d'une excroissance conductrice elle-même connectée à la borne d'un appareil modulaire de la première rangée. Une liaison par fil souple est alors établie avec un second "bec de canard" connecté à un appareil de la seconde rangée.

Les bornes des appareils modulaires qui coopèrent dans le raccordement de deux rangées contiguës réalisent en fait une connexion avec deux éléments distincts : l'extrémité du fil de raccordement direct ou l'excroissance conductrice de ladite borne en "bec de canard" d'une part, et la dent de la barre de pontage d'autre part.

Cette double connexion n'est possible que dans les bornes traditionnelles à cages et vis, qui offrent un organe de blocage des conducteurs dont la course est variable et dont le serrage est progressif. Encore faut-il cependant que la configuration de la barre de pontage, et notamment de l'isolant qui entoure souvent sa longrine, ne bloque pas l'accès à la borne et à l'insertion ultérieure d'un conducteur de liaison ou d'une borne de raccordement en "bec de canard". En d'autres termes, dans ce cas, il faut que l'extension à une rangée supplémentaire ait été prévue dès le début, faute de quoi il faut desserrer toutes les bornes de la rangée initiale pour enlever la barre de pontage et réaliser ladite insertion, avant de resserrer lesdites bornes. Cela n'est évidemment guère pratique.

Par ailleurs, lorsque les bornes de connexion équipant les appareils modulaires électriques sont du type à raccordement rapide, c'est-à-dire basés sur une lame élastique déformée au moment de l'insertion du conducteur et qui reprend sa forme initiale en bloquant ce dernier, il n'est tout simplement plus possible d'utiliser de conducteurs de raccordement direct ou de borne en "bec de canard", car la mise en place de la barre de pontage s'effectue simultanément pour tous les appareils d'une même rangée à raccorder, sans possibilité d'un raccordement ultérieur. Les conducteurs souples ne sont au surplus pas adaptés à ces bornes.

L'objet de la présente invention vise à proposer un nouveau dispositif de repiquage conçu pour fonctionner dans les deux hypothèses, c'est-à-dire avec les borniers de raccordement traditionnels à cages et vis d'une part, et avec les borniers à lame ressort pour raccordement rapide d'autre part.

A cet effet, le dispositif de l'invention permet le repiquage de la tension électrique disponible sur une lamelle rigide du type dent de peigne de pontage. Il comporte classiquement une borne permettant la connexion d'un conducteur destiné à réaliser le raccordement électrique entre ladite lamelle et les appareils modulaires d'une autre rangée, ainsi que des moyens de fixation à cette lamelle. L'idée à la base de l'invention est en fait de s'affranchir de toute liaison avec les bornes internes aux appareils électriques modulaires, et d'opérer une connexion à l'extérieur de ceux-ci, par exemple sur une dent d'une barre de pontage.

L'invention se caractérise essentiellement en ce que lesdits moyens de fixation comportent
- une lame de contact coopérant avec ladite borne de connexion de telle sorte qu'elle soit électriquement reliée au conducteur, en condition de serrage de celui-ci dans ladite borne ;
- une lame de blocage coopérant avec les moyens de serrage / desserrage du conducteur dans la borne de connexion ;
lesdites lames comportant d'une part chacune une fenêtre permettant le passage de la lamelle rigide, lesdites fenêtres étant disposées à leur extrémité distale de la borne de connexion et sensiblement centrées l'une par rapport à l'autre, et étant coulissables d'autre part l'une au contact de l'autre afin que lorsque les moyens de serrage / desserrage du conducteur sont actionnés dans le sens du serrage, ladite lamelle rigide soit bloquée et fixée rigidement à la borne de connexion par le déplacement relatif desdites fenêtres aboutissant au coincement de la lamelle.

Le but de cette configuration est de permettre, lors du serrage du conducteur de raccordement à la seconde rangée, le serrage concomitant de la liaison avec la lamelle rigide constituée par la dent du peigne de pontage.

En d'autres termes, la mise en place à vide du dispositif de l'invention sur une dent ne rencontre aucune résistance, c'est-à-dire lorsque sa borne ne fixe aucun conducteur, le blocage de la liaison mécanique avec ladite dent s'effectuant en une seule opération, au moment du serrage du conducteur de raccordement.

De préférence, ladite borne de connexion du conducteur et lesdits moyens de fixation sont intégrés à un boîtier comportant des moyens de solidarisation à un appareil auquel est connectée la lamelle rigide, par exemple par clipsage, lesdits moyens étant prévus pour encaisser les efforts éventuellement exercés sur ledit conducteur.

Les tensions exercées sur les fils et conducteurs externes ne doivent en effet pas conduire à l'extraction de la lame / du peigne de pontage, d'où la nécessité que les efforts qui y sont appliqués soient mécaniquement repris, en l'occurrence par le boîtier et ses moyens de fixation à l'appareil électrique.

Bien que l'invention, dans son principe, puisse être mise en oeuvre avec une pluralité de configurations, notamment pour la borne, celle-ci comporte de préférence une cage d'allure parallélépipédique au moins partiellement fermée sur quatre parois et une vis de serrage / desserrage du conducteur dans ladite cage.

Il s'agit par conséquent d'une borne traditionnelle, qui offre notamment l'avantage précité de permettre de multiples raccordements effectués séquentiellement, et permet le cas échéant de mettre en place une liaison électrique avec plus d'une rangée supplémentaire.

La lame de contact comporte une portion d'extrémité en appui sur le côté interne de la paroi de la cage opposée à celle qui loge la vis. Le serrage du conducteur de raccordement aboutit par conséquent à immobiliser ladite lame de contact par rapport à la cage de la borne.

Selon une géométrie possible, ladite portion d'extrémité est d'allure perpendiculaire au reste de la lame, et accrochée à la cage par adaptation de leurs formes respectives. En d'autres termes, ladite lame se développe, hormis cette portion d'extrémité, selon une direction axiale par rapport à la vis de serrage / desserrage.

Cette portion d'extrémité de la lame de contact, ainsi que la cage de la borne, ont été conçues de telle sorte qu'elles soient facilement fixées l'une à l'autre, en assurant une liaison mécanique empêchant d'extraire la lame lorsqu'elle est dans sa position de fonctionnement.

Ainsi, la cage comporte, dans ses deux faces d'allure parallèle à l'axe de la vis, des fenêtres en regard de longueur axialement supérieure et transversalement inférieure à la largeur de ladite portion d'extrémité perpendiculaire, laquelle est de longueur telle qu'elle dépasse de la cage lorsqu'elle est au contact de sa paroi d'appui. Cette portion comporte de plus des découpes latérales permettant l'insertion des montants latéraux délimitant lesdites fenêtres.

Lesdites découpes latérales servent en réalité de butée s'opposant à l'extraction de la lame.

La seconde lame, la lame de blocage, comporte quant à elle une portion d'extrémité en appui sur le côté externe de la paroi de la cage logeant la vis, paroi par ailleurs dotée d'une ouverture de passage de ladite vis.

Les deux lames, respectivement de contact et de blocage, s'appliquent donc sur les faces opposées (respectivement interne et externe) de deux parois en vis-à-vis de la cage.

A l'instar de la lame de contact, la portion d'extrémité de la lame de blocage est orientée perpendiculairement au reste de la lame, sur une longueur correspondant au moins à celle de la paroi sur laquelle elle est en appui, la partie terminale de cette portion étant elle-même orientée perpendiculairement à ladite portion, de manière à créer les conditions d'un appui perpendiculaire au précédent. Le reste de la lame se développe le long de la cage.

Ladite portion d'extrémité de la lame de blocage agit par conséquent à la manière d'un crochet disposé à l'extérieur de la cage de la borne de raccordement. Ce crochet, qui épouse la surface extérieure, est par conséquent composé de pans perpendiculaires les uns aux autres.

Pour permettre le passage de la vis, ladite portion d'extrémité et sa partie terminale sont de préférence configurées en fourche permettant le passage de la vis de serrage / desserrage.

A part leurs portions d'extrémités perpendiculaires, dont on a vu qu'elles sont disposées en appui sur deux parois distinctes de la cage, les lames sont disposées au contact l'une de l'autre, de manière à permettre un coulissement relatif. A vide, leurs fenêtres d'extrémité sont disposées en regard l'une de l'autre. Cependant, celle de la lame de blocage, de même forme que celle de la lame de contact, en est de dimensions plus importantes.

De préférence, ces fenêtres sont de forme rectangulaire, de même que la section des lamelles rigides constituant les dents des barres de pontage. En généralisant, on peut considérer que leurs formes reprennent toujours celle de la section de la lame rigide à bloquer. Ainsi, ledit blocage pourra être effectué, par exemple par effet guillotine, lors du coulissement relatif des lames.

Celles-ci sont en principe réalisées en tôle métallique découpée et pliée, pour des raisons à la fois économiques, ce procédé de fabrication étant peu onéreux, et également techniques: la lame de contact, réalisant une fonction de liaison électrique, doit nécessairement être métallique. Il n'en va certes pas de même pour la lame de blocage, qui pourrait être réalisée en un matériau non conducteur : les contraintes mécaniques s'appliquant sur cette lame, notamment au serrage, conduisent toutefois à la fabriquer également en tôle métallique.

Dans le but d'améliorer les conditions d'utilisation du dispositif de repiquage de l'invention, la borne et les moyens de fixation à la lamelle rigide peuvent être, comme déjà mentionné, disposés dans un boîtier doté d'orifices de passage pour la vis, le conducteur à connecter à la borne et ladite lamelle rigide. Les fenêtres des lames de blocage et de contact sont alors sensiblement centrées, à vide, par rapport à deux orifices en regard permettant le passage de la lamelle.

Un tel boîtier présente plusieurs intérêts : en premier lieu, il offre une structure permettant une reprise des efforts qui sont exercés sur la vis de la borne au moment du serrage / desserrage. En second lieu, un tel boîtier peut lui-même présenter des moyens de liaison mécaniques à l'un des éléments partie prenant à la distribution électrique dans le tableau, tel que décrits auparavant. Enfin, il permet également une reprise des efforts exercés directement sur le conducteur.

Ainsi, selon une possibilité, ledit boîtier peut être fixable à l'enveloppe d'un appareil électrique modulaire, et les orifices de passage de la lamelle rigide sont alors prévus pour être disposés en regard de l'ouverture menant, dans l'appareil modulaire, à sa borne de connexion interne.

Cette solution améliore encore la rigidité de l'ensemble, et par conséquent la reprise des efforts exercés sur la vis, puisque le boîtier du dispositif de repiquage devient solidaire de celui de l'appareil électrique modulaire auquel il est fixé, lequel est immobilisé sur un rail.

Selon une configuration possible, le boîtier peut comporter, dépassant de sa paroi destinée à venir en appui contre la paroi de l'appareil modulaire ouvrant sur la borne de connexion, un crochet et une patte élastique, d'une seule pièce avec ledit boîtier, et prévus pour coopérer avec des évidements correspondants pratiqués dans l'enveloppe de l'appareil électrique modulaire. Ladite patte présente alors par exemple une extrémité d'allure unciforme se clipsant élastiquement dans un creux de l'évidement qu'elle investit dans ledit boîtier. Ce sont en particulier ces éléments de fixation qui participent à la reprise des efforts exercés sur le conducteur connecté dans la borne.

De préférence encore, le crochet et la patte sont disposés aux deux extrémités de la paroi du boîtier, laquelle est de longueur égale à la face du boîtier de l'appareil électrique modulaire auquel le boîtier est accolé.

Avant toute opération de raccordement, il suffit donc de clipser le boîtier du dispositif de repiquage de l'invention sur l'un des appareils modulaires de la rangée initiale, d'en fixer un second sur la seconde rangée avant de procéder à la mise en place des peignes de pontage et du conducteur de raccordement entre les deux rangées. La fixation desdits boîtiers aux appareils modulaires se fait sans outil, et est quasi immédiate, du fait du mode de fixation utilisé. La préparation du raccordement entre deux rangées connexes est donc simplifié à l'extrême, en utilisant pour chacune de ces rangées un composant supplémentaire à montage / démontage quasi immédiat.

Pour améliorer encore l'intégration et la facilité d'utilisation, on peut prévoir que deux dispositifs selon l'invention, à savoir deux bornes et leurs lames de contact et de blocage associées, soient disposées parallèlement dans un boîtier qui comporte un nombre d'orifices doublé, les paires d'orifices en regard pour le passage de deux lamelles étant décalées pour faire face aux bornes d'appareils électriques modulaires phase / neutre. Ce concept est bien entendu généralisable à des appareils par exemple triphasés, etc...

Dans ce cas, le problème du raccordement à une seconde rangée est résolu simultanément pour la phase et le neutre, lorsque la configuration de branchement l'exige. En pratique, ce boîtier double est bien entendu celui qui sera généralement mis en oeuvre, sauf branchement très particulier, lorsque des appareils phase / neutre sont employés dans un tableau de distribution.

L'invention va à présent être décrite plus en détail, en référence aux figures annexées, pour lesquelles :
- la figure 1 est une vue en perspective d'un dispositif de repiquage selon l'invention, mis en place sur une double barre de pontage ;
- la figure 2 représente, en perspective, un dispositif complet selon l'invention ;
- la figure 3 montre une vue en perspective d'une lame de contact ;
- la figure 4 représente, toujours en perspective, une lame de blocage prévue pour coopérer avec la lame de la figure 3, dans le cadre d'un dispositif de repiquage selon l'invention ;
- la figure 5 est une vue en perspective éclatée de la version de l'invention implantée dans un boîtier double, interposé entre l'appareil électrique modulaire et la barre de pontage ; et
- les figures 6 et 7 montrent, respectivement en perspective et de côté, l'utilisation de ces boîtiers doubles dans une configuration à trois rangées contiguës d'appareillages modulaires dépendant d'un même appareil de tête.

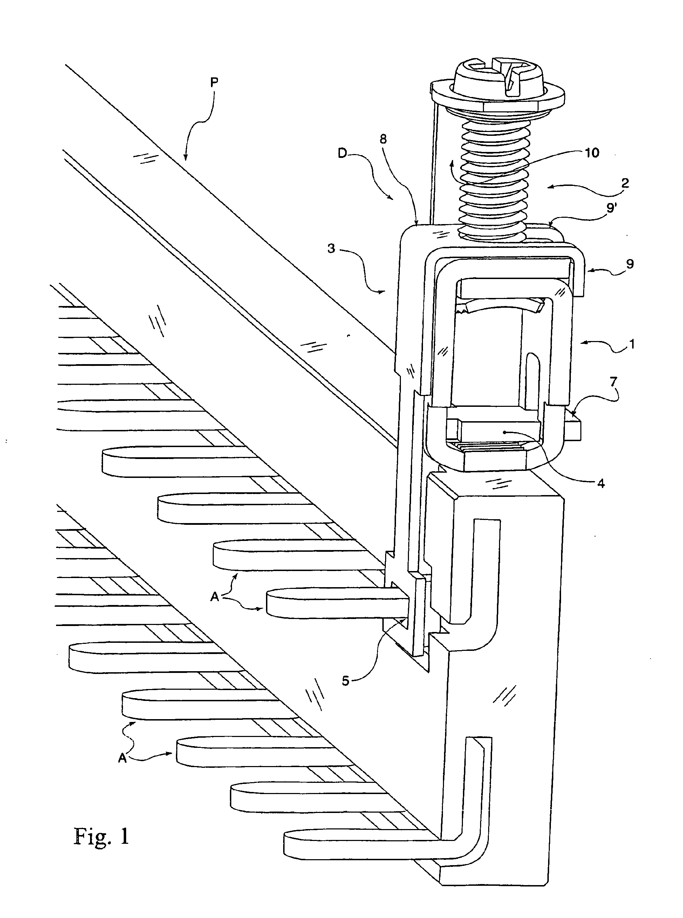

En référence à la figure 1, le dispositif de repiquage de l'invention, désigné par la référence générale (D), est enfilé sur une dent (A) d'un peigne de pontage (P) double. Un tel peigne ou barre de pontage (P) est notamment prévu pour alimenter une rangée d'appareils modulaires électriques phase / neutre, dont les bornes de connexion respectivement de la phase et du neutre sont décalées, dans la hauteur et dans la largeur, de manière à loger lesdites dents (A).

Le dispositif (D) de l'invention se compose d'une cage (1) et d'une vis (2) formant une borne de connexion traditionnelle, auxquelles sont adjointes deux lames (3, 4) dont l'extrémité distale de la cage (1) est munie de fenêtres (5, 6) permettant de loger la dent (A). Pour un fonctionnement à vide, comme c'est le cas dans la représentation de la figure1, c'est-à-dire sans conducteur de raccordement serré par la vis (2) de la cage (1), les deux fenêtres (5, 6), disposées en regard de l'autre, sont telles que la fenêtre (6), de dimensions plus petites, est sensiblement centrée dans la fenêtre (5). Dans ce cas, leurs dimensions respectives permettent le passage aisé de la dent (A), de manière à ce que la mise en place du dispositif (D) de l'invention puisse être faite sans effort.

Lorsqu'un serrage est effectué sur un conducteur de raccordement dont l'embout dénudé est disposé à l'intérieur de la cage (1), la position relative des lumières (5, 6) se modifie. En effet, dans ce cas, l'action de serrage est effectué via la vis (2), qui comprime ledit embout au contact d'une portion d'extrémité (7) de la lame de contact (4).

Les efforts de serrage se répercutent à la cage (1), et par conséquent à la lame de blocage (3) qui se déplace axialement par rapport à la lame (4), entraînant le coincement de la dent (A) dans les orifices (5, 6), par déplacement relatif de ceux-ci aboutissant à un effet guillotine.

Ce déplacement relatif est possible car la portion d'extrémité supérieure (8) de la lame de blocage (3) est en appui sur la face externe de la paroi supérieure de la cage (1). Cette portion d'extrémité (8), figurée en fourche, présente à son tour deux parties terminales (9, 9') repliées perpendiculairement par rapport à elles, c'est-à-dire qu'elles se retrouvent parallèles à l'axe principal de la lame de blocage (3). Cette liaison mécanique garantit la transmission des déplacements de la cage (1) à la lame de blocage (3).

Il est à noter que, dans la configuration de borne équipant le dispositif (D) de repiquage de l'invention, le blocage de l'extrémité dénudé du câble à l'intérieur de la cage se fait non pas directement par la vis (2), mais classiquement par l'intermédiaire d'une pièce (10) dont l'extrémité inférieure est prévue pour comprimer de manière optimale ladite extrémité dénudée.

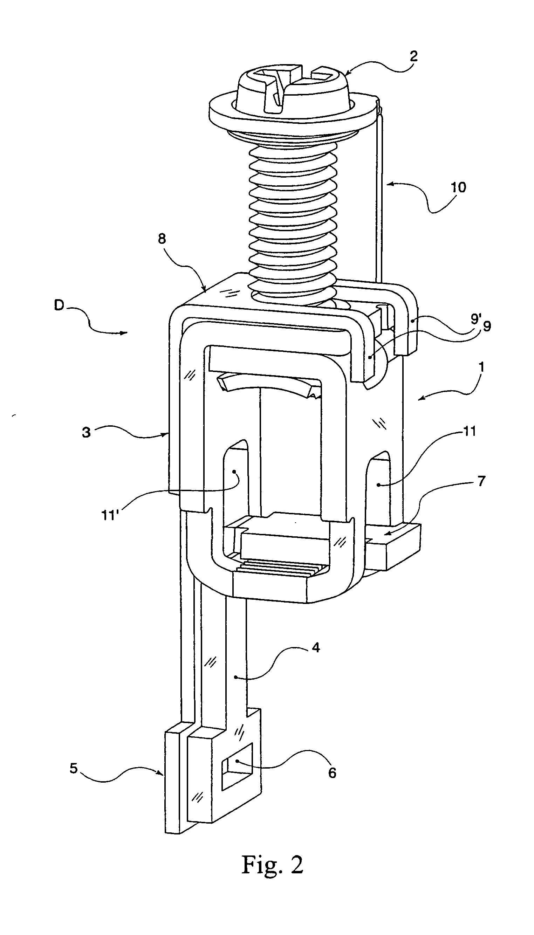

La configuration complète du dispositif de repiquage (D) de l'invention apparaît en figure 2, sans lamelle rigide par exemple constituée d'une dent (A) d'une barre de pontage (P).

Cette figure montre clairement que les fenêtres (5, 6) pratiquées dans les extrémités des lames respectivement (3) et (4) sont centrées l'une par rapport à l'autre en fonctionnement à vide de la borne. Les parties axiales desdites lames (3, 4) sont au contact l'une de l'autre, et elles peuvent par conséquent coulisser l'une sur l'autre.

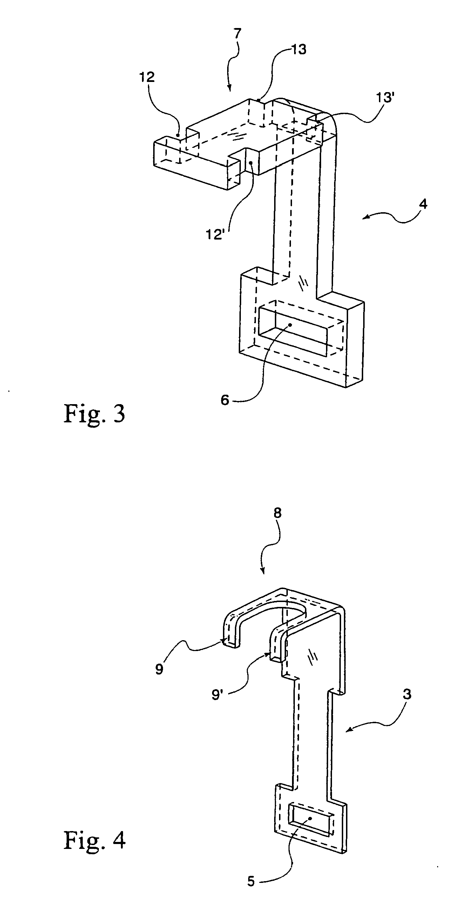

Comme on l'a déjà mentionné, la cage (1) comporte des parois sur quatre faces, par exemple afin de laisser le passage à l'extrémité dénudée d'un conducteur à raccorder. Toutefois, les deux parois parallèles à l'axe de rotation de la vis (2) comporte des fenêtres (11, 11') dont l'utilité sera expliquée plus en détail dans la suite, en référence à la figure 3.

Celle-ci représente la lame de contact (4). Sa portion d'extrémité terminale (7) présente une forme d'une part et des dimensions d'autre part qui sont prévues pour optimiser sa coopération avec la cage (1). Ainsi, la longueur de cette portion est supérieure à la profondeur de la cage, de sorte que, comme cela apparaît en figures 1 et 2, ladite portion terminale (7) dépasse à l'extérieur de la cage (1). Sa largeur est telle que des découpes (12, 12', 13, 13') ont pu y être pratiquées, de manière à s'adapter aux montants bordant les fenêtres (11, 11') de la cage (1). L'adaptation de forme des fenêtres / découpes permet de retenir la lame de contact (4) dans la cage (1), lesdites découpes (12, 12', 13, 13') formant butée en relation avec lesdits montants.

La hauteur des fenêtres (11, 11') excède la largeur de la portion terminale (7) de la lame (4). Ainsi, moyennant une rotation de 90° de ladite lame, il est possible d'insérer cette extrémité (7) dans lesdites fenêtres (11, 11') avant d'imprimer à la lame (4) une rotation en sens inverse d'angle équivalent, de manière à l'accrocher à l'intérieur de la cage (1), lorsque les découpes (12, 12', 13,13') sont disposées au niveau des montants desdites fenêtres (11, 11').

En référence à la figure 4, il devient apparent que l'épaisseur de la lame de blocage (3) est moindre que celle de la lame de contact (4). La partie supérieure de cette lame (3) est en fait configurée en une sorte de crochet englobant un volume parallélépipédique, permettant l'appui de la portion terminale (8) et des pattes (9, 9') sur deux faces adjacentes de la cage (1). Le reste de la lame (3) est alors disposé au contact de la lame (4).

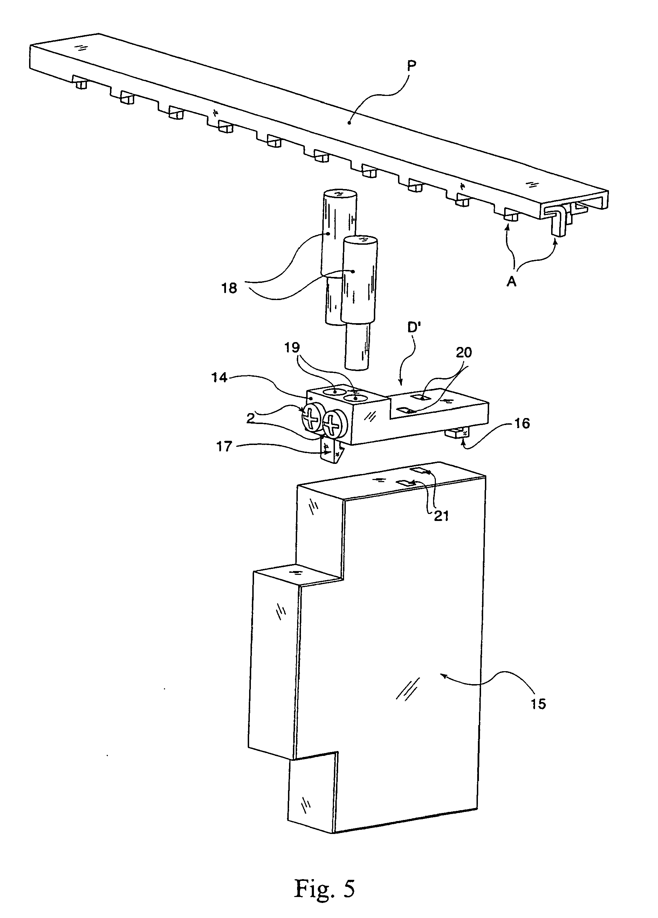

Pour améliorer encore la simplicité d'utilisation du dispositif de repiquage (D) selon l'invention, il est possible de l'insérer dans un boîtier, tel que cela est montré en figure 5. L'avantage supplémentaire offert par ce boîtier (14) est d'offrir un cadre rigide à la cage, susceptible de proposer des surfaces d'appui à la cage (1), notamment lorsqu'elle est soumise à des efforts, qui sont alors répercutés au boîtier (14). Ce dernier, dans la version (D') présentée par la figure 5, permet l'insertion de deux dispositifs (D) de telle sorte que la phase et le neutre puissent être raccordés à une rangée secondaire à partir d'un même appareil électrique modulaire (15).

Le boîtier (14) peut être fixé très simplement au boîtier de l'appareil modulaire électrique (15), par exemple au moyen d'un crochet (16) et d'une patte (17) s'adaptant à des évidements correspondants du boîtier (15). Compte tenu de leur positionnement respectif, le crochet (16) sera introduit en premier dans son logement, un basculement ultérieure permettant le clipsage de la patte (17), dont l'extrémité unciforme permet le verrouillage dans le boîtier de l'appareil électrique modulaire (15). D'une manière avantageuse, ces excroissances (16, 17) du boîtier (14) sont réalisées d'une seule pièce avec ce dernier.

Le boîtier (14) comporte par ailleurs un certain nombre d'orifices permettant le passage des éléments mécaniques avec lesquels il coopère. Ainsi, les vis (2) doivent pouvoir être accessibles de l'extérieur, afin de commander le serrage / desserrage des conducteurs (18), lorsqu'ils sont insérés dans leur cage (1) respective via les orifices (19).

De même, des orifices d'allure rectangulaire (20) permettent le passage des dents (A) de la barre de pontage (P). Ces orifices (20) sont disposés en vis-à-vis d'autres orifices (qui n'apparaissent pas sur la figure) du boîtier, lesquels débouchent en face des ouvertures (21) donnant accès aux bornes de connexion rapide disposées dans le boîtier de l'appareil électrique modulaire (15).

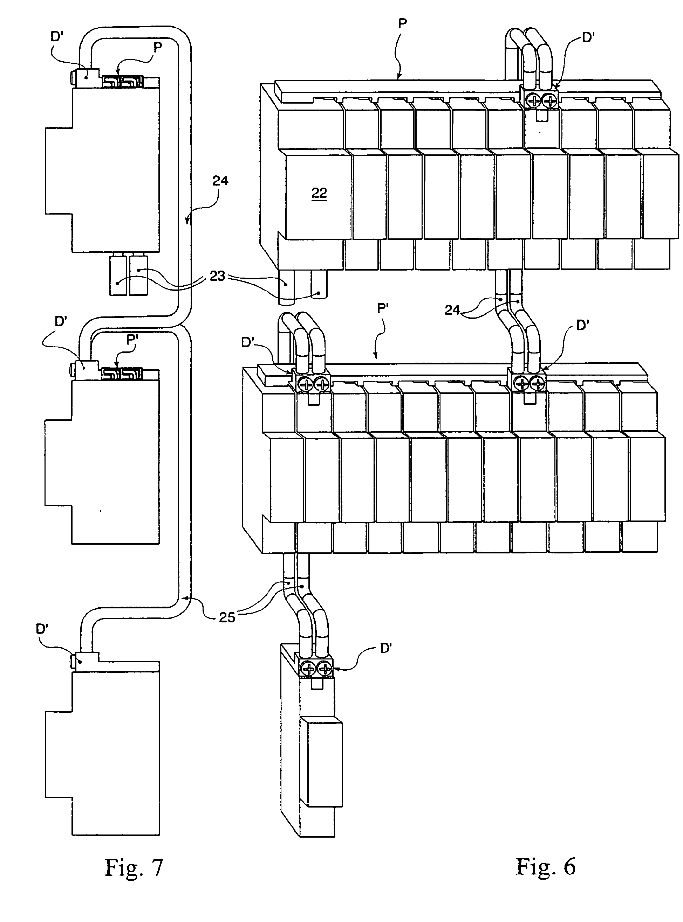

Les figures 6 et 7 forment une représentation générale du fonctionnement du dispositif selon l'invention, dans un tableau de distribution classique. Seuls les appareils électriques modulaires et leurs connexions sont cependant représentés dans ces figures.

Sur la gauche de la rangée supérieure de la figure 6, un appareil de tête, par exemple un interrupteur différentiel, est alimenté en phase neutre par des conducteurs (23). Il distribue ses signaux de sortie par l'intermédiaire d'un peigne de pontage (P) à des appareils modulaires électriques disposés sur trois rangées, la dernière ne comportant qu'un seul produit. Pour que la distribution se fasse correctement de la première à la deuxième rangée, un dispositif (D') selon l'invention, c'est-à-dire tel que décrit en référence à la figure 5, est fixé sur l'un quelconque des appareils électriques modulaires de la première rangée. Des conducteurs de raccordement (24) réalisent une liaison électrique entre ce dispositif (D') et un second, disposé par exemple sous le premier dans la seconde rangée.

Pour pouvoir avoir accès au produit disposé sur la troisième rangée, deux dispositifs (D') supplémentaires sont fixés d'une part à l'un des appareils modulaires de la seconde rangée, et d'autre part à l'unique appareil disposé sur la troisième rangée. Ces deux derniers appareils sont reliés par des conducteurs de raccordement (25).

Les exemples décrits ci-dessus ne sont bien entendu nullement exhaustifs de l'invention. Celle-ci englobe au contraire toutes les variantes de forme et de configuration qui sont à la portée de l'homme de l'art.

## Revendications

1. Dispositif de repiquage (D) du signal électrique disponible sur une lamelle rigide du type dent (A) de peigne de pontage (P), ledit dispositif comportant une borne de connexion d'un conducteur (18) à relier électriquement à ladite lamelle (A), et des moyens de fixation à cette dernière,
**caractérisé en ce que** lesdits moyens de fixation comportent :
- une lame de contact (4) coopérant avec la borne de connexion de telle sorte qu'elle soit électriquement reliée au conducteur (18) en condition de serrage de celui-ci dans ladite borne ; et
- une lame de blocage (3) coopérant avec les moyens de serrage / desserrage du conducteur (18) dans la borne de connexion ;
lesdites lames comportant d'une part chacune une fenêtre (5, 6) permettant le passage de la lamelle (A) rigide, lesdites fenêtres (5, 6) étant disposées à leur extrémité distale de la borne de connexion et sensiblement centrées l'une par rapport à l'autre, et étant coulissables d'autre part l'une au contact de l'autre afin que lorsque les moyens de serrage / desserrage du conducteur (18) sont actionnés dans le sens du serrage, ladite lamelle (A) rigide soit bloquée et fixée rigidement à la borne de connexion par le déplacement relatif desdites fenêtres (5, 6) aboutissant au coincement de la lamelle (A).

2. Dispositif de repiquage (D) selon la revendication précédente, **caractérisé en ce que** ladite borne de connexion du conducteur (18) et lesdits moyens de fixation sont intégrés à un boîtier (14) comportant des moyens de solidarisation à un appareil (15) auquel est connectée la lamelle (A) rigide, par exemple par clipsage, lesdits moyens étant prévus pour encaisser les efforts exercés sur ledit conducteur (18).

3. Dispositif de repiquage (D) selon la revendication précédente, **caractérisé en ce que** la borne de connexion comporte une cage (1) d'allure parallélépipédique au moins partiellement fermée sur quatre parois et une vis (2) de serrage / desserrage du conducteur (18) dans ladite cage (1).

4. Dispositif de repiquage (D) selon la revendication précédente, **caractérisé en ce que** la lame (4) de contact comporte une portion d'extrémité (7) en appui sur le côté interne de la paroi de la cage (1) opposée à celle qui loge la vis (2).

5. Dispositif de repiquage (D) selon la revendication précédente, **caractérisé en ce que** ladite portion d'extrémité (7) est d'allure perpendiculaire au reste de la lame (4), et accrochée à la cage (1) par adaptation de leurs formes.

6. Dispositif de repiquage (D) selon la revendication précédente, **caractérisé en ce que** la cage (1) comporte, dans ses deux faces d'allure parallèle à l'axe de la vis (2), des fenêtres (11, 11') en regard de longueur axialement supérieure et transversalement inférieure à la largeur de ladite portion d'extrémité (7) perpendiculaire, laquelle est de longueur telle qu'elle dépasse de la cage (1) lorsqu'elle est au contact de sa paroi d'appui, et comporte des découpes (12, 12' ; 13, 13') latérales permettant l'insertion des montants latéraux délimitant lesdites fenêtres (11, 11') dans lesdites faces.

7. Dispositif de repiquage (D) selon l'une quelconque des revendications 4 à 6, **caractérisé en ce que** la lame de blocage (3) comporte une portion d'extrémité (8) en appui sur le côté externe de la paroi de la cage (1) logeant la vis (2), et dotée d'une ouverture de passage de cette dernière.

8. Dispositif de repiquage (D) selon la revendication précédente, **caractérisé en ce que** ladite portion d'extrémité (8) est orientée perpendiculairement au reste de la lame (3), sur une longueur correspondant au moins à celle de ladite paroi sur laquelle elle est en appui, la partie terminale de cette portion étant elle-même orientée perpendiculairement à ladite portion, de manière à créer les conditions d'un appui perpendiculaire au précédent, le reste de la lame (3) se développant le long de la cage (1).

9. Dispositif de repiquage (D) selon l'une des revendications 7 et 8, **caractérisé en ce que** ladite portion d'extrémité (8) et sa partie terminale sont configurées en fourche (9, 9') permettant le passage de la vis (2) de serrage / desserrage.

10. Dispositif de repiquage (D) selon l'une quelconque des revendications précédentes, **caractérisé en ce que** la lame de blocage (3) comporte une fenêtre (5) de même forme et de dimensions plus importante que la fenêtre (6) de la lame de contact (4).

11. Dispositif de repiquage (D) selon l'une quelconque des revendications précédentes, **caractérisé en ce que** lesdites lames (3, 4) de blocage et de contact sont réalisées en tôle métallique découpée et pliée.

12. Dispositif de repiquage (D) selon l'une quelconque des revendications 8 à 11, **caractérisé en ce que** la borne et les moyens de fixation à la lamelle (A) rigide sont disposés dans un boîtier (14) doté d'orifices (19, 20) de passage pour la vis, le conducteur (18) à connecter à la borne et ladite lamelle (A) rigide, les fenêtres (5, 6) des lames (3, 4) de blocage et de contact étant sensiblement centrées, à vide, par rapport à deux orifices (20) en regard permettant le passage de la lamelle.

13. Dispositif de repiquage (D) selon la revendication précédente, **caractérisé en ce que** ledit boîtier (14) est fixable à l'enveloppe d'un appareil électrique modulaire (15), et les orifices (20) de passage de la lamelle (A) rigide sont prévus pour être disposés en regard de l'ouverture (21) menant, dans l'appareil modulaire (15), à la borne de connexion.

14. Dispositif de repiquage (D) selon la revendication précédente, **caractérisé en ce que** le boîtier (14) comporte, dépassant de sa paroi destinée à venir en appui contre la paroi de l'appareil modulaire (15) comportant la borne de connexion, un crochet (16) et une patte élastique (17), d'une seule pièce avec ledit boîtier (14), et prévus pour coopérer avec des évidements correspondants pratiqués dans l'enveloppe de l'appareil électrique modulaire (15), ladite patte (17) présentant une extrémité d'allure unciforme se clipsant élastiquement dans un creux de l'évidement qu'elle investit.

15. Dispositif de repiquage (D) selon la revendication précédente, **caractérisé en ce que** ledit crochet (16) et ladite patte (17) sont disposés aux deux extrémités de la paroi du boîtier (14), laquelle est de longueur égale à la face du boîtier (14) de l'appareil électrique modulaire (15) auquel il est accolé.

16. Dispositif de repiquage (D) selon l'une des revendications 12 à 15, **caractérisé en ce qu**'au moins deux bornes, et leurs lames (3, 4) de contact et de blocage associées sont disposées parallèlement dans un boîtier (14) qui comporte un nombre d'orifices (19, 20) au moins doublé, les paires d'orifices (20) en regard pour le passage de deux lamelles (A) étant décalées pour faire face aux bornes des appareils électriques modulaires (15).

## Claims

1. Connector (D) for re-connecting the electrical signal available on a rigid tooth-type strip (A) of a bridging comb(P), said connector (D) comprising a connection terminal of a conductor (18) to be connected electrically to said strip (A) and means of fixing to the latter, **characterised in that** said fixing means comprise:
- a contact plate (4) cooperating with the connection terminal in such a manner that it is electrically connected to the conductor (18) in the clamped state of the latter in said terminal, and
- a locking plate (3) cooperating with the means for clamping/unclamping the conductor (18) in the connection terminal,
said plates each including, firstly, an opening (5, 6) through which the rigid strip (A) can pass, said openings (5, 6) being disposed at their ends furthest from the connection terminal and being substantially centred with respect to one another and, secondly, being slidable in contact with one another so that, when the means for clamping/unclamping of the conductor (18) are operated in the clamping direction, said rigid strip (A) is locked and fixed rigidly to the connection terminal by the relative displacement of said openings (5, 6), resulting in gripping of the strip (A).

2. Connector (D) according to the preceding claim, **characterised in that** said connection terminal of the conductor (18) and said fixing means are integrated in a housing (14) which includes means for firm connection thereof to a device (15) to which the rigid strip (A) is connected, for example by snap-fixing, said means being provided to resist the loads exerted on said conductor (18).

3. Connector (D) according to the preceding claim, **characterised in that** the connection terminal includes a cage (1) of parallelepipedic configuration at least partially closed on four side walls and a screw (2) for clamping/unclamping the conductor (18) in said cage (1).

4. Connector (D) according to the preceding claim, **characterised in that** the contact plate (4) includes an end portion (7) bearing against the internal side of the wall of the cage (1) opposite the wall which holds the screw (2).

5. Connector (D) according to the preceding claim, **characterised in that** said end portion (7) is disposed perpendicularly to the rest of the plate (4) and is hooked to the cage (1) through matching of their shapes.

6. Connector (D) according to the preceding claim, **characterised in that** the cage (1) has, in its two faces disposed parallel to the axis of the screw (2), opposed openings (11, 11') the axial length of which is greater and the transverse length of which is less than the width of said perpendicular end portion (7), the length of which is such that it extends beyond the cage (1) when it is in contact with the support wall thereof, and which includes lateral recesses (12, 12'; 13, 13') allowing the lateral upright portions delimiting said openings (11, 11') to be inserted in said faces.

7. Connector (D) according to any one of claims 4 to 6, **characterised in that** the locking plate (3) includes an end portion (8) bearing against the external side of the wall of the cage (1) which holds the screw (2) and provided with an opening through which the latter can pass.

8. Connector (D) according to the preceding claim, **characterised in that** said end portion (8) is oriented perpendicularly to the rest of the plate (3) over a length corresponding at least to that of said wall against which it bears, the end part of this portion being itself oriented perpendicularly to said portion, so as to create the conditions for perpendicular support against the former, the rest of the plate (3) extending along the cage (1).

9. Connector (D) according to either of claims 7 and 8, **characterised in that** said end portion (8) and its end part have a forked configuration (9, 9') which allows the clamping/unclamping screw (2) to pass through.

10. Connector (D) according to any one of the preceding claims, **characterised in that** the locking plate (3) has a an opening (5) of the same shape and of larger dimensions than the opening (6) of the contact plate (4).

11. Connector (D) according to any one of the preceding claims, **characterised in that** said locking and contact plates (3, 4) are made of punched and folded sheet metal.

12. Connector (D) according to any one of claims 8 to 11, **characterised in that** the terminal and the means of fixing to the rigid strip (A) are located in a housing (14) provided with openings (19, 20) through which can pass the screw, the conductor (18) to be connected to the terminal and said rigid strip (A), the openings (5, 6) of the locking and contact plates (3, 4) being substantially centred, when under no load, with respect to two facing openings (20) through which the strip can pass.

13. Connector (D) according to the preceding claim, **characterised in that** said housing (14) can be fixed to the casing of a modular electrical device (15), and the openings (20) through which the rigid strip (A) can pass are provided to be disposed opposite the opening (21) leading to the connection terminal in the modular device (15).

14. Connector (D) according to the preceding claim, **characterised in that** the housing (14) includes a hook (16) and an elastic catch (17) formed integrally with said housing (14), which hook (16) and catch (17) extend beyond the wall of said housing (14) designed to bear against the wall of the modular device (15) which includes the connection terminal, and are provided to cooperate with corresponding recesses formed in the casing of the modular electrical device (15), said catch (17) having a hook-shaped end which clips elastically into an undercut of the recess in which it engages.

15. Connector (D) according to the preceding claim, **characterised in that** said hook (16) and said catch (17) are disposed at the two ends of the wall of the housing (14), the length of which wall is equal to that of the face of the housing (14) of the modular electrical device (15) to which it is attached.

16. Connector (D) according to any one of claims 12 to 15, **characterised in that** at least two terminals and their associated contact and locking plates (3, 4) are disposed parallel to one another in a housing (14) which includes an at least duplicated number of openings (19, 20), the facing pairs of openings (20) through which two strips (A) can pass being offset in order to face the terminals of the modular electrical devices (15).

## Patentansprüche

1. Vorrichtung (D) zum Abzweigen des elektrischen Signals, das an einer starren Lamelle des Zahntyps (A) eines Brückenkamms (P) anliegt, wobei die Vorrichtung einen Anschluss für die Verbindung mit einem mit der Lamelle (A) elektrisch zu verbindenden Leiter (18) und Mittel zum Befestigen an diesem Letzteren umfasst,
**dadurch gekennzeichnet, dass** die Befestigungsmittel umfassen:
- ein Kontaktplättchen (4), das mit dem Verbindungsanschluss in der Weise zusammenwirkt, dass es mit dem Leiter (18) in einem Zustand, in dem dieser in dem Anschluss festgeklemmt ist, mit dem Leiter (18) elektrisch verbunden ist; und
- ein Blockierplättchen (3), das mit den Festklemm-/Klemmlösemitteln des Leiters (18) in dem Verbindungsanschluss zusammenwirkt;
wobei die Plättchen einerseits jeweils ein Fenster (5, 6) besitzen, das den Durchgang der starren Lamelle (A) ermöglicht, wobei die Fenster (5, 6) an ihrem distalen Ende des Verbindungsanschlusses und im Wesentlichen aufeinander zentriert angeordnet sind, und andererseits in einen gegenseitigen Kontakt gleiten können, damit dann, wenn die Festklemm-/Klemmlösemittel des Leiters (18) in Festklemmrichtung betätigt werden, die starre Lamelle (A) blockiert und am Verbindungsanschluss starr befestigt ist, indem die Fenster (5, 6) relativ zueinander verlagert werden, was zu einem Festklemmen der Lamelle (A) führt.

2. Abzweigungsvorrichtung (D) nach dem vorhergehenden Anspruch, **dadurch gekennzeichnet, dass** der Verbindungsanschluss des Leiters (18) und die Befestigungsmittel in ein Gehäuse (14) integriert sind, das Mittel zum Verbinden mit einem Gerät (15) aufweist, mit dem die starre Lamelle (A) beispielsweise durch Einrasten verbunden ist, wobei die Mittel dazu vorgesehen sind, die auf den Leiter (18) ausgeübten Kräfte aufzunehmen.

3. Abzweigungsvorrichtung (D) nach dem vorhergehenden Anspruch, **dadurch gekennzeichnet, dass** der Verbindungsanschluss einen Käfig (1) mit parallelepipedförmiger Gestalt, der an vier Wänden wenigstens teilweise verschlossen ist, und eine Festklemm-/Klemmlöseschraube (2) für den Leiter (18) in dem Käfig (1) aufweist.

4. Abzweigungsvorrichtung (D) nach dem vorhergehenden Anspruch, **dadurch gekennzeichnet, dass** das Kontaktplättchen (4) einen Endabschnitt (7) aufweist, der sich an der Innenseite der Wand des Käfigs (1), die jener gegenüberliegt, die die Schraube (2) aufnimmt, abstützt.

5. Abzweigungsvorrichtung (D) nach dem vorhergehenden Anspruch, **dadurch gekennzeichnet, dass** der Endabschnitt (7) einen zu dem Rest des Plättchens (4) senkrechten Verlauf hat und in den Käfig durch Formanpassung eingehängt ist.

6. Abzweigungsvorrichtung (D) nach dem vorhergehenden Anspruch, **dadurch gekennzeichnet, dass** der Käfig (1) in seinen zwei Flächen, die einen zu der Achse der Schraube (2) parallelen Verlauf haben, gegenüberliegende Fenster (11, 11'), deren axiale Länge größer und deren transversale Länge kleiner als die Breite des senkrechten Endabschnitts (7) sind, der eine Länge besitzt, die jene des Käfigs (1) übersteigt, wenn er mit seiner Abstützwand in Kontakt ist, und seitliche Ausschnitte (12, 12', 13, 13'), die ein Einschieben von seitlichen Stützen ermöglichen, die die Fenster (11, 11') der Flächen begrenzen, aufweist.

7. Abzweigungsvorrichtung (D) nach einem der Ansprüche 4 bis 6, **dadurch gekennzeichnet, dass** das Blockierplättchen (3) einen Endabschnitt (8) aufweist, der sich an der äußeren Seite der Wand des die Schraube (2) aufnehmenden Käfigs (1) abstützt und mit einer Öffnung für den Durchgang dieser Letzteren versehen ist.

8. Abzweigungsvorrichtung (D) nach dem vorhergehenden Anspruch, **dadurch gekennzeichnet, dass** der Endabschnitt (8) auf einer Länge, die wenigstens jener der Wand entspricht, auf der er sich abstützt, senkrecht zum restlichen Plättchen (3) orientiert ist, wobei der Endteil dieses Abschnitts seinerseits senkrecht zu dem Abschnitt orientiert ist, derart, dass Bedingungen einer Abstützung geschaffen werden, die zu der Vorhergehenden senkrecht ist, wobei der Rest des Plättchens (3) längs des Käfigs (1) verläuft.

9. Abzweigungsvorrichtung (D) nach einem der Ansprüche 7 und 8, **dadurch gekennzeichnet, dass** der Endabschnitt (8) und sein Endteil gabelförmig (9, 9') konfiguriert sind, was den Durchgang der Festklemm-/Klemmlöseschraube (2) ermöglicht.

10. Abzweigungsvorrichtung (D) nach einem der vorhergehenden Ansprüche, **dadurch gekennzeichnet, dass** das Blockierplättchen (3) ein Fenster (5) aufweist, das dieselbe Form wie das Fenster (6) des Kontaktplättchens (4), jedoch größere Abmessungen als dieses hat.

11. Abzweigungsvorrichtung (D) nach einem der vorhergehenden Ansprüche, **dadurch gekennzeichnet, dass** das Blockierplättchen (3) und das Kontaktplättchen (4) aus einem gestanzten und gebogenen Metallblech hergestellt sind.

12. Abzweigungsvorrichtung (D) nach einem der Ansprüche 8 bis 11, **dadurch gekennzeichnet, dass** der Anschluss und die Mittel zum Befestigen an der starren Lamelle (A) in einem Gehäuse (14) angeordnet sind, das mit Öffnungen (19, 20) für den Durchgang der Schraube, des mit dem Anschluss zu verbindenden Leiters (18) und der starren Lamelle (A) versehen ist, wobei die Fenster (5, 6) des Blockierplättchens (3) und des Kontaktplättchens (4) im ausgeschalteten Zustand in Bezug auf zwei gegenüberliegende Öffnungen (20), die den Durchgang der Lamelle ermöglichen, im Wesentlichen zentriert sind.

13. Abzweigungsvorrichtung (D) nach dem vorhergehenden Anspruch, **dadurch gekennzeichnet, dass** das Gehäuse (14) an einer Verkleidung eines modularen elektrischen Geräts (15) befestigt werden kann und die Öffnungen (20) für den Durchgang der starren Lamelle (A) vorgesehen sind, um gegenüber der Öffnung (21) angeordnet zu werden, die in dem modularen Gerät (15) zu dem Verbindungsanschluss führt.

14. Abzweigungsvorrichtung (D) nach dem vorhergehenden Anspruch, **dadurch gekennzeichnet, dass** das Gehäuse (14) jenseits seiner Wand, die dazu bestimmt ist, sich an der Wand des den Verbindungsanschluss aufweisenden modularen Geräts (15) abzustützen, einen Haken (16) und einen elastischen Ansatz (17) aufweist, die einteilig mit dem Gehäuse (14) ausgebildet und dazu vorgesehen sind, mit entsprechenden Aussparungen zusammenzuwirken, die in der Verkleidung des modularen elektrischen Geräts (15) ausgebildet sind, wobei der Ansatz (17) ein Ende mit gleichmäßigem Verlauf aufweist, das in einen Einschnitt der Aussparung, in die er eingesetzt ist, einrastet.

15. Abzweigungsvorrichtung (D) nach dem vorhergehenden Anspruch, **dadurch gekennzeichnet, dass** der Haken (16) und der Ansatz (17) an zwei Enden der Wand des Gehäuses (14) angeordnet sind, deren Länge gleich der Fläche des Gehäuses (14) des modularen elektrischen Geräts (15) ist, an das es angefügt ist.

16. Abzweigungsvorrichtung (D) nach einem der Ansprüche 12 bis 15, **dadurch gekennzeichnet, dass** wenigstens zwei Anschlüsse und ihre zugeordneten Kontakt- und Blockierplättchen (3, 4) in einem Gehäuse (14) parallel angeordnet sind, wobei das Gehäuse eine wenigstens doppelt so große Anzahl von Öffnungen (19, 20) aufweist, wobei die Paare gegenüberliegender Öffnungen (20) für den Durchgang von zwei Lamellen (A) versetzt sind, damit sie den Anschlüssen der modularen elektrischen Geräte (15) zugewandt sind.
